# EUROPEAN PATENT APPLICATION

(11) **EP 3 094 121 A1**
(43) Date of publication of application: **16.11.2016**
(21) Application number: 15305713.8
(22) Date of filing: 12.05.2015
(51) Int. Cl.: H04W 8/26, H04L 29/12

(54) **APPARATUSES, METHODS AND COMPUTER PROGRAMS FOR PROVIDING INFORMATION RELATED TO IDENTIFICATIONS OF A PLURALITY OF MOBILE TRANSCEIVERS**

(71) Applicant: ALCATEL LUCENT, 92100 Boulogne-Billancourt (FR)
(72) Inventor: Schaich, Frank, 70435 Stuttgart (DE); Wild, Thorsten, 70435 Stuttgart (DE)
(74) Representative: 2SPL Patentanwälte PartG mbB

(57) **Abstract**

In a mobile communication system, cell-wide short identifiers are assigned to the mobile transceivers by the base station transceiver to reduce the overhead of long addresses (e.g., globally unique). The base station obtains information about a number of mobile terminals and determines the appropriate bit-length of the identifiers of the terminals. If new terminals join the cell and there are no more identifiers available, the base station increases the bit-length and notifies (e.g., through a broadcast message) the terminals about the change. Similarly, when terminals leave the cell, the base station may decide to reduce the length of the identifiers. The updates can be performed respectively by prepending a pre-defined digit or removing a digit. As digit removal may lead to collisions (i.e. same identifier for multiple terminals), the base station should individually provide replacement identifiers to affected terminals.

## Description

### Technical Field

Embodiments relate to apparatuses, methods and computer programs for providing information related to identifications of a plurality of mobile transceivers, more particularly, but not exclusively, based on information related to a bit-length to be used to represent the information related to the identifications.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the number of concurrent associations in communication systems are steadily increasing. While connected devices, such as smartphones, computers, or streaming devices already increase the number of devices associated with communication systems, a new category of devices adds to that number. The Internet of Things (IoT), which predominantly relies on Machine-to-Machine (M2M) communication, connects formerly unconnected devices, such as thermostats, household appliances, bio monitors etc. to communication systems, e.g. mobile communication systems.

Machine-to-Machine communication, especially Massive Machine-to-Machine communication (MMC) may increase the number of devices participating in communication systems. As such appliances partaking in MMC may be located in remote areas or may be mobile, MMC may also use mobile communication systems, e.g. General Packet Radio Service (GPRS), Universal Mobile Telecommunications System (UMTS) or Long Term Evolution (LTE). Such appliances may often increase the number of devices associated with the mobile communication system.

More information can be found in:
Wild, T.; Schaich, F.; Yejian Chen, "5G air interface design based on Universal Filtered (UF-) OFDM," Digital Signal Processing (DSP), 2014 19th International Conference on , vol., no., pp.699,704, 20-23 Aug. 2014

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs for providing information related to identifications of a plurality of mobile transceivers. In future mobile communication systems, such as e.g. 5^{th} Generation (5G) mobile communication system, the Internet of Things (IoT) or Massive Mobile Communication (MMC) may substantially raise the number of devices associated with a cell within the mobile communication system. Due to the additional number of devices, a number of bits used to identify the number of devices may increase. As messages sent by IoT or MMC devices may contain very little payload data, such an address may pose a substantial overhead and may comprise a large part of a data packet. Embodiments may use a variable, but cell-wide length of individual identifiers for an identification. When the number of mobile transceivers associated with a cell increases, the length of the identification may grow for all mobile transceiver, e.g. by introducing a predetermined prefix or suffix. When the number of mobile transceivers associated with the cell decreases, the length of the identification may be reduced. When the length of the identification is reduced, collisions may occur, and may be handled for collided addresses only, or all identifications may be re-assigned.

Embodiments provide an apparatus for a base station transceiver of a mobile communication system. The apparatus is configured for providing information related to identifications of a plurality of mobile transceivers of the mobile communication system associated with the base station transceiver. The apparatus comprises at least one interface to communicate with the plurality of mobile transceivers. The apparatus comprises a control module configured to obtain information related to a number of mobile transceivers in the plurality of mobile transceivers and determine information related to a bit-length to be used to represent the information related to the identifications based on the information related to the number of mobile transceivers. The control module is further configured to determine the information related to the identifications based on the information related to the bit-length and to assign the information related to the identifications to the plurality of mobile transceivers. Determining the information related to the bit-length based on the number of mobile transceivers may decrease a number of bits used for addressing the mobile transceivers associated with the base station transceivers, and may reduce an overhead caused by the length of the identification of the mobile transceivers.

In at least some embodiments, the control module may be configured to update the information related to the bit-length based on updated information related to the number of mobile transceivers. Updating the information related to the bit-length may enable an adjustment of the length of the identification, based on a current number of mobile transceivers of the plurality of mobile transceivers associated with the mobile transceiver.

In various embodiments, the control module may be configured to determine information related to individual identifiers for the plurality of mobile transceivers based on the information related to the bit-length. A mobile transceiver of the plurality of mobile transceivers may be associated with an individual identifier. The information related to the individual identifiers may be used to address the mobile transceivers of the plurality of mobile transceivers, and may be used to determine collisions between individual identifiers after an update to the information related to the bit-length.

In at least some embodiments, the control module may be configured to update the information related to the individual identifiers based on the information related to the bit-length and to provide the information related to the updated identifiers to the plurality of mobile transceivers. Updating the information related to the individual identifiers based on the information related to the bit-length may enable an adjustment of the length of the individual identifiers, based on a current number of mobile transceivers of the plurality of mobile transceivers associated with the mobile transceiver.

In various embodiments, the control module may be configured to provide bit-length modification information as part of the information related to the updated identifiers. Using the bit-length modification information may enable the mobile transceivers of the plurality of mobile transceivers to update their respective individual identifier, and may reduce a signaling overhead, since only collided individual identifiers might be retransmitted.

In at least some embodiments, the control module may be configured to update the information related to individual identifiers by adding a pre-defined digit when the bit-length modification information indicates an increased bit-length and by removing the digit when the bit-length modification information indicates a decreased bit-length. The control module may be configured to identify duplicate individual identifiers in the updated information related to the individual identifiers and to determine information related to a replacement individual identifier for a duplicate individual identifier. Using the bit-length modification information may enable the mobile transceivers of the plurality of mobile transceivers to update the individual identifier by adding or removing a digit, and may reduce a signaling overhead, since only collided individual identifiers might be retransmitted. "Collided individual identifiers" may mean that the identifier was used by multiple devices (as e.g. a result from decreasing the bit-length).

In various embodiments, the apparatus may further comprise a storage module. The control module may be configured to store the information related to the number of mobile transceivers in the plurality of mobile transceivers as information related to a previous number of mobile transceivers using the storage module. The control module may be further configured to determine the information related to the bit-length based on a statistical analysis of the information related to the previous number of mobile transceivers. Using a statistical analysis of the information related to the previous number of mobile transceivers may enable a preemptive adjustment of the information related to the bit-length, and may reduce a number of updates to the information related to the bit-length, which may reduce a signaling overhead. Statistical analysis may be done on the activity pattern and traffic behavior of devices over time. If available, location-based information may be used as well.

In at least some embodiments, the plurality of mobile transceivers may comprise a subset of mobile transceivers having a limited mobility. The control module may be configured to determine the information related to individual identifiers such, that, when the control module updates the information related to the bit-length, a probability, that a duplicate individual identifier occurs for an individual identifier of a mobile transceiver comprised in the subset of mobile transceivers having a limited mobility is lower than a probability that a duplicate individual identifier occurs for an individual identifier of a mobile transceiver not comprised in the subset of mobile transceivers having a limited mobility. Avoiding or reducing duplicate individual identifiers for mobile transceivers having a limited mobility, such as IoT or MMC devices, may decrease a signaling overhead and may reduce a power consumption of the IoT or MMC devices, which may often be low power devices and might often only infrequently communicate with the mobile communication system, which might delay an update of the information related to the bit-length.

In various embodiments, the information related to the bit-length may correspond to a number of bits used to represent an identification of a mobile transceiver. An update of the information related to the bit-length may correspond to a changed bit-length used to represent an identification of a mobile transceiver. Providing the number of bits used to represent the identification of a mobile transceiver may enable the mobile transceivers to adjust when scanning a header of packets received. Updating the bit-length may reduce a number of bits used when fewer mobile transceivers are associated with the base station transceiver, and may reduce an overhead.

Embodiments further provide an apparatus for a mobile transceiver of a mobile communication system. The apparatus comprises at least one transceiver module to communicate with a base station transceiver of the mobile communication system. The apparatus further comprises a control module configured to obtain information related to a bit-length to be used to represent an identification of the mobile transceiver. The control module is further configured to update information related to a previous identification based on the information related to the bit-length to obtain information related to a current identification of the mobile transceiver. The control module is further configured to use the information related to the current identification to communicate with the base station transceiver. Determining and/or updating the information related to the current identification based on the information related to the bit-length may enable the control module to adjust a length of the current identification, and may decrease an overhead caused by the length of the identification.

In at least some embodiments, the control module may be configured to update the information related to the previous identification by adding a pre-defined digit when the information related to the bit-length indicates an increased bit-length and by removing a digit when the information related to the bit-length indicates a decreased bit-length to obtain the information related to the current identification. Determining changes to the information related to the bit-length may enable the mobile transceivers of the plurality of mobile transceivers to update the current identifier by adding or removing a digit, and may reduce a signaling overhead, since the identifier might not be transmitted, and only collided current identifiers might be retransmitted.

In various embodiments, an update of the information related to the previous identification may correspond to a change in a bit-length used to represent an identification of the mobile transceiver. Updating the bit-length may reduce a number of bits used when fewer mobile transceivers are associated with the base station transceiver, and may reduce an overhead.

In at least some embodiments, the control module may be configured to obtain the information related to the bit-length via a downlink broadcast channel provided by the base station transceiver using the transceiver module. Using a downlink broadcast channel may further reduce a signaling overhead compared to individual signaling.

Embodiments further provide a method for a base station transceiver of a mobile communication system. The method is for providing information related to identifications of a plurality of mobile transceivers of the mobile communication system associated with the base station transceiver. The method comprises communicating with the plurality of mobile transceivers. The method further comprises obtaining information related to a number of mobile transceivers in the plurality of mobile transceivers. The method further comprises determining information related to a bit-length to be used to represent the information related to the identifications based on the information related to the number of mobile transceivers. The method further comprises determining the information related to the identifications based on the information related to the bit-length. The method further comprises assigning the information related to the identifications to the plurality of mobile transceivers.

Embodiments further provide a method for a mobile transceiver of a mobile communication system. The method comprises communicating with a base station transceiver of the mobile communication system. The method further comprises obtaining information related to a bit-length to be used to represent an identification of the mobile transceiver. The method further comprises updating information related to a previous identification based on the information related to the bit-length to obtain information related to a current identification of the mobile transceiver. The method further comprises using the information related to the current identification to communicate with the base station transceiver.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus for a base station transceiver of a mobile communication system, for providing information related to identifications of a plurality of mobile transceivers associated with the base station transceiver;
- Fig. 2: shows example signaling between one particular mobile transceiver and a base station of an exemplary embodiment;
- Fig. 3: shows example signaling between a mobile transceiver and a base station transceiver of an exemplary embodiment to resolve a conflict;
- Fig. 4: illustrates a block diagram of an embodiment of the apparatus further comprising a storage module;
- Fig. 5: illustrates a block diagram of an embodiment of an apparatus for a mobile transceiver in a mobile communication system;
- Fig. 6: illustrates a flow chart of an embodiment of a method for a base station transceiver of a mobile communication system; and
- Fig. 7: illustrates a flow chart of an embodiment of a method for a mobile transceiver in a mobile communication system.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the 5G era, forecasts may anticipate a strong increase in number of devices to be served by an access point. Especially the introduction of the Internet of Things (IoT) into 5G may drive this trend. Messages related with the IoT may often be small and very sporadic (e.g. every once in a while a temperature sensor might transmit a measurement). Naturally, this kind of message transport might not be burdened with extensive overhead related to the IP-protocol. Instead the IP tunnel might be terminated at the base station transceiver. For being able to identify the messages being sent by these nodes, the base station may be required to assign a unique address to them.

To uniquely map the received messages to the right IP tunnel, i.e. to identify the origin of this message, an address with a fixed number of bits might be assigned. The length of this address may depend on the number of nodes to be distinguished. As forecasted the number of nodes within a cell might approach very high numbers (e.g. in smart cities). Therefore, a relatively big address space may have to be foreseen and single addresses might be relatively long (>10 Bits) even if only a small number of nodes are within the coverage range of the cell and active. As a large fraction of the messages may be small, those relatively large addresses may generate a large signaling overhead, which might not be desirable.

Instead of using a fixed address space/length for all cells (matched to the worst case in terms of number of nodes), embodiments may adaptively change the length of the addresses according to the actual number of active devices (e.g. in a long-term manner). This may handle variations of devices over time and cell location to reduce overhead.

Embodiments may support various approaches, two of which are outlined below, wherein the latter one may require less signaling overhead:
1. Assign new addresses to all attached nodes if the current number of nodes calls for ad adjustment of a length of individual identifiers (i.e. if the number exceeds the current dimension or if the number is reduced allowing for a smaller address space).
2. In a long term manner the base station transceiver may provide within the cell-specific broadcast channel the current length of the address, e.g. as information related to a bit-length to be used to represent information related to identifications, as described below. I.e. if the number of connected nodes is rising/shrinking above/below a given threshold, the base station transceiver may provide a higher/lower number. All nodes may adapt their address according to a given rule. Eventual conflicts might be resolved by respective messaging.

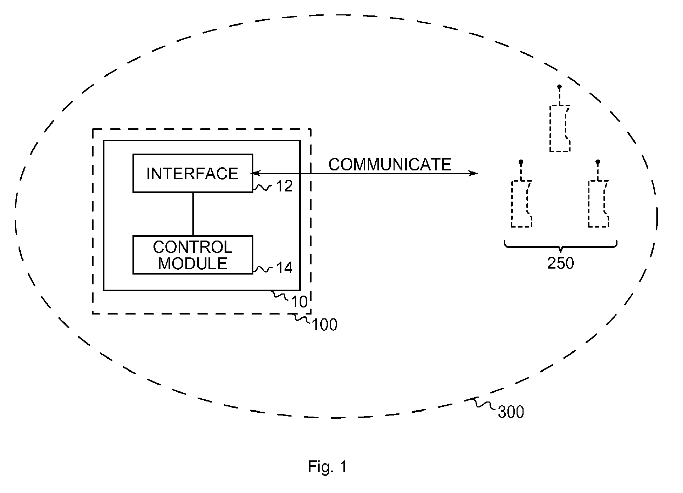

Fig. 1 illustrates a block diagram of an embodiment of an apparatus 10 for a base station transceiver 100 of a mobile communication system 300. The apparatus is configured for providing information related to identifications of a plurality of mobile transceivers 250 of the mobile communication system 300 associated with the base station transceiver 100. In at least some embodiments, the information related to the identifications may be based on information related to a length of individual identifications of mobile transceiver of the plurality of mobile transceivers 250. In at least some embodiments, the base station transceiver 100 may comprise the apparatus 10, as indicated by the dashed rectangle. Embodiments further provide the base station transceiver 100 comprising the apparatus 10.

In at least some embodiments, the base station transceiver 100 being associated with a mobile transceiver of the plurality of mobile transceiver 250 may correspond to the base station transceiver 100 being connected to the mobile transceiver in idle mode or in connected mode. Here and in the following an idle mode is to be understood as a state of a transceiver or the backhaul modem in which it is associated with a cell of a base station transceiver in terms of a registration, such that the transceiver or backhaul modem can be reached in case of a network originated call. In idle mode the transceiver or backhaul modem is assumed not to have an ongoing communication link to the mobile communication system, however, the mobile communication system has information on how to reach the transceiver or backhaul modem, for example, on a cell level, or on a routing/tracking area or a location area level, which may extend across multiple cells. The mobile communication system may then page the transceiver or modem in case an active connection for data exchange should be established through the said registration level, e.g. a cell or multiple cells of a routing area or location area the transceiver or backhaul modem is camped on. The transceiver or modem may then respond to such paging and establish an active communication link, for example, using according random access procedures, radio link establishment procedures etc. The transceiver or backhaul modem may then transfer to an active or connected mode, in which a communication or radio link is established and data exchange can be carried out. As the transceiver or backhaul modem moves through the cells of the mobile communication system its location changes and so do the cells, which cover the location of the transceiver or backhaul modem. The transceiver or backhaul modem may then select or re-select cells to associate or register with in idle mode and associate or handover to different cells in active or connected mode.

In general, the mobile communication system 300 may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, e.g. the base station transceiver 100, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a connected appliance, a connected sensor, a transceiver module for machine type communication, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver, e.g. a mobile transceiver of the plurality of mobile transceivers 250, can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus 10 comprises at least one interface 12 to communicate with the plurality of mobile transceivers 250. The at least one interface 12 may correspond to one or more inputs and/or outputs for receiving and/or transmitting information, which may be in digital (bit) values according to a specified code, within a module, between modules or between modules of different entities.

The apparatus 10 further comprises a control module 14 configured to obtain information related to a number of mobile transceivers in the plurality of mobile transceivers 250. The information related to the number of mobile transceiver in the plurality of mobile transceiver 250 may correspond to a number of mobile transceiver being part of the plurality of mobile transceiver, which may be associated with the base station transceiver 100. The at least one interface 12 is coupled to the control module 14.

The control module 14 is further configured to determine information related to a bit-length to be used to represent the information related to the identifications based on the information related to the number of mobile transceivers. In various embodiments, the information related to the bit-length may correspond to a number of bits used to represent an identification of a mobile transceiver. In at least some embodiments, the control module 14 may determine the information related to the bit-length based on a number of devices identifiable with a number of bits, and/or the control module 14 may identify a number of devices identifiable with a number of bits, when approaches to provide error tolerance, error detection and/or error correction, e.g. based on higher hamming distances, are used. In various embodiments, the information related to the bit-length may be based on [log₂ |*MT*|┐, where |*MT*| is the number of mobile transceivers in the plurality of mobile transceivers 250. In various embodiments, the information related to the bit-length may indicate small identifiers, as it might only be used by the base station transceiver 100 to see what device is transmitting. For forwarding the message through the core network, the base station transceiver 100 may exchange the ID by e.g. an Internet Protocol (IP) header. In at least some embodiments, the control module 14 may provide the information related to the bit-length to mobile transceivers of the plurality of mobile transceivers 250, e.g. via a downlink broadcast channel.

The control module 14 is further configured to determine the information related to the identifications based on the information related to the bit-length. In various embodiments, the information related to the identifications may comprise information related to a length of individual identifiers, which may be based on the information related to the bit-length, and/or information related to individual identifiers, as will be introduced subsequently.

The control module 14 is further configured to assign the information related to the identifications to the plurality of mobile transceivers 250. In at least some embodiments, the control module 14 may be configured to assign individual identifiers, as will be introduced subsequently, to the mobile transceivers of the plurality of mobile transceivers 250. The control module 14 may be configured to determine a register or index of the individual identifiers, and/or the control module may be configured to provide information related to the individual identifiers to at least a subset of the plurality of mobile transceivers 250.

In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc.

In at least some embodiments, the control module 14 may be configured to update the information related to the bit-length based on updated information related to the number of mobile transceivers. An update of the information related to the bit-length may correspond to a changed bit-length used to represent an identification of a mobile transceiver.

In at least some embodiments, the control module 14 may be configured to determine the information related to the bit-length based on a lower threshold and/or based on an upper threshold. If the number of mobile transceiver surpasses the upper threshold, the control module 14 may be configured to update the information related to the bit-length to indicate a greater bit-length. The upper threshold may correspond to a number of devices that may be identified using that bit-length, e.g. 16 for identifiers with a bit-length of 4, or may be lower than that, to allow for a transition time. The lower threshold may correspond to a number of devices that may be identified using a lower bit-length, e.g. 8 if the current bit-length is 4 and a subsequent bit-length may be 3, or may be lower, to avoid situations, in which a short dip in the numbers of associated mobile transceivers may cause significant signaling overhead. The thresholds may be based on the number of devices identifiable with that bit-length, and/or may be a percentage and/or a fixed value lower than the number of devices identifiable with that bit-length. In various embodiments, the control module 14 may further determine the information related to the bit-length based on a time delay, e.g. based on the time counter started when the number of mobile transceivers crosses the lower threshold, to avoid frequent updates to the information related to the bit-length and additional overhead caused thereby.

In at least some embodiments, the control module 14 may be configured to determine information related to individual identifiers for the plurality of mobile transceivers 250 based on the information related to the bit-length. A mobile transceiver of the plurality of mobile transceivers 250 may be associated with an individual identifier. In at least some embodiments, the information related to the individual identifiers may comprise individual identifiers of the mobile transceiver of the plurality of mobile transceivers 250. An individual identifier may be based on the information related to the bit-length, e.g. based on a bit-length comprised in the information related to the bit-length, and may be used to identify a mobile transceiver associated with the base station transceiver 100.

In various embodiments, the control module 14 may be configured to update the information related to the individual identifiers based on the information related to the bit-length and to provide the information related to the updated identifiers to the plurality of mobile transceivers 250. In various embodiments, the information related to the updated identifiers may comprise the information related to the bit-length, updated individual identifiers for mobile transceivers of the plurality of mobile transceivers 250 associated with the base station transceiver 100, or updated individual identifiers for a subset of mobile transceivers of the plurality of mobile transceivers 250 associated with the base station transceiver 100, e.g. if previous identifiers might collide after an update to the information related to the bit-length.

In at least some embodiments, the control module 14 may be configured to provide bit-length modification information as part of the information related to the updated identifiers. In at least some embodiments, the bit-length modification information may be based on the information related to the bit-length, and may comprise the information related to the bit-length or information related to a change, e.g. an increase or a decrease, of the bit-length.

In various embodiments, the control module 14 may be configured to update the information related to individual identifiers by adding a pre-defined digit when the bit-length modification information indicates an increased bit-length and by removing the digit when the bit-length modification information indicates a decreased bit-length. The pre-defined digit may be a binary digit, e.g. a 0 or a 1. The digit may be added or removed at the beginning (as a prefix), at the end (as a suffix), or may be added to/removed from an arbitrary position of a bit length correspond to the individual identifier.

The control module 14 may be configured to identify duplicate individual identifiers in the updated information related to the individual identifiers and to determine information related to a replacement individual identifier for a duplicate individual identifier. In at least some embodiments, the control module 14 may be configured to determine the information related to the replacement individual identifier for all individual identifiers colliding, or for all but one, which may retain the previous updated individual identifier. The control module 14 may be configured to provide the information related to the replacement individual identifier to the corresponding mobile transceivers, e.g. based on individual messaging or via a downlink broadcast channel. In at least some embodiments, the control module 14 may identify the duplicate individual identifiers before the update and may provide the information related to the replacement individual identifier using the individual identifier before the update, or the control module may use a longer identifier of the mobile transceiver, e.g. based on an International Mobile Subscriber Identity (IMSI) number or Integrated Circuit Card Identifier (ICCID) number, to address the corresponding mobile transceivers.

In an exemplary embodiment, it may be assumed, that at a given point in time 16 mobile transceivers of the plurality of mobile transceivers 250 are associated with the base station transceiver 100 (and each is identified with an address of length 4). Then a mobile transceiver wants to enter the system. This may trigger the control module 14 to update the information related to the bit-length to increment a length of the individual identifiers and correspondingly increase an address pool, and assign to each mobile transceiver a new identifier of length 5 bits. The mobile transceivers may use the new identifier to communicate with the base station transceiver 100.

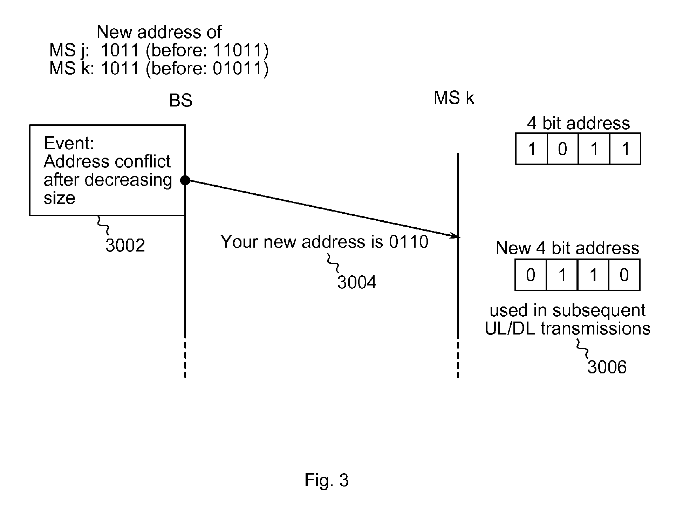

The other way around, i.e. 17 nodes are active each having an identifier with length of 5 Bits and one of this nodes leaves the network is further shown in Fig. 3. Then the control module 14 may be triggered to update the information related to the bit-length to decrease the length of identifiers and resolve collisions, and to assign new addresses to the nodes with length 4. The mobile transceivers may use the new identifier to communicate with the base station transceiver 100. The update may be indicated by forward control signaling, e.g. via a control channel.

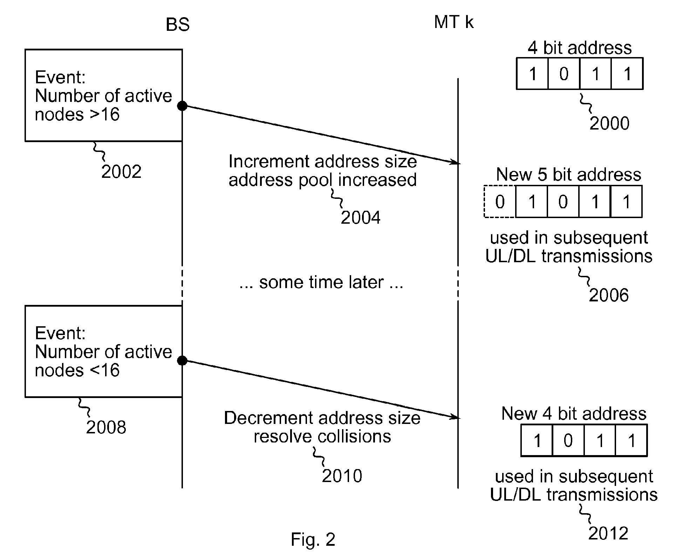

Fig. 2 shows example signaling between a mobile transceiver of the plurality of mobile transceivers 250 (here denoted as MT k) and the base station transceiver 100 (BS) of an exemplary embodiment. It may me assumed that at a given point in time 16 nodes may be active (and each is assigned an individual identifier of length 4). Within the broadcast channel the respective field communicating the length of these addresses, e.g. as information related to the bit-length, may comprise the number 4.

Then a new mobile transceiver wants to associate 2002 with the base station transceiver 100. This may trigger the control module 14 to change the field within the broadcast message from 4 to 5 2004, thus increasing the length of the individual identifiers and the address space. Nodes receiving this message might simply add a '0' ('1' would be possible, as long as each node adds the same number) to the beginning of its identifier (or at the end, or at any position within its address, as long as each node does the same) 2006. The mobile transceivers may use the new identifier to communicate with the base station transceiver 100. This may provide 16 new addresses being available to the base station transceiver 100. One of these may be assigned to the node associating with the base station transceiver 100.

The other way around, i.e. 17 nodes are active each having an address with length of 5 Bits and one of this mobile transceiver leaves 2008 the base station transceiver 100 may also be supported by embodiments. Then the base station transceiver 100 may be triggered to assign new addresses to the nodes with length 4. This may trigger the control module 14 to update the information related to the bit-length and change the field within the broadcast message from 5 to 4 2010, reducing the length of individual addresses and reducing the address space. Nodes receiving this message may remove 2012 the first bit (or alternatively the last or any of the bits of the address, as long as each node does the same) of its address. Naturally, this may lead to some (not all, typically far less than half the number of nodes) nodes having the same address. Therefore, the base station transceiver 100 may resolve 2010 these conflicts by assigning directly new addresses to these nodes, e.g. via dedicated messaging. The control module 14 may be aware of the used addresses and thus may be able to identify conflicts and resolve them.

Fig. 3 shows example signaling between a mobile transceiver of the plurality of mobile transceivers 250 (here denoted as MT k) and the base station transceiver 100 (BS) of an exemplary embodiment to resolve a conflict. When a duplicate individual identifier is detected 3002 after an update to the information related to the bit-length, e.g. because mobile transceiver j was assigned the individual identifier 11011 before the update and mobile transceiver k was assigned the individual identifier 01011 before the update, and the leading digit was removed following the update resulting in two mobile transceivers having the identifier 1011, the control module 14 may be configured to provide 3004 the replacement individual identifier, e.g. 0110, to one of the mobile transceivers, e.g. the mobile transceiver k. The mobile transceiver k may use 3006 the new identifier to communicate with the base station transceiver 100.

In various embodiments, the plurality of mobile transceivers 250 may comprise a subset of mobile transceivers having a limited mobility. Mobile transceivers of the subset may have a limited mobility and a constant expected activity (e.g. smart city sensor devices). The control module 14 may be configured to determine the information related to individual identifiers such, that, when the control module updates the information related to the bit-length, a probability, that a duplicate individual identifier occurs for an individual identifier of a mobile transceiver comprised in the subset of mobile transceivers having a limited mobility is lower than a probability that a duplicate individual identifier occurs for an individual identifier of a mobile transceiver not comprised in the subset of mobile transceivers having a limited mobility. In various embodiments, mobile transceivers having a limited mobility may correspond to stationary mobile transceivers, e.g. of the Internet of Things. Mobile transceiver not comprised in the subset may correspond to mobile transceivers with a high mobility, e.g. smart phones or cell phones that may switch base station transceivers. In at least some embodiments, the control module 14 may be configured to determine the subset of mobile transceiver having a limited mobility based on information related to a location of the plurality of mobile transceivers 250, information related to a traffic pattern of the plurality of mobile transceivers 250, and/or information related to a device class of the plurality of mobile transceivers 250.

In at least some embodiments, the control module 14 may be configured to assign mobile transceivers of the subset individual identifiers, which might not be mutually affected by updates, e.g. they may share an address space, for which adding or removing digits might not cause collisions for mobile transceivers of the subset. If updates are performed using a pre-defined suffix, mobile transceivers of the subset might be assigned identifiers with a number of leading pre-defined digits, e.g. 000001, 000010, 000011 if 0 is the pre-defined digit, so when an control module updates the information related to the bit-length, which may lead to removing the leading digit, the mobile transceivers of the subset may update their individual identifiers without causing collisions within the subset. In case the bit-length is further reduced, embodiments may avoid signaling for mobile transceivers of the subset by assigning the mobile transceivers of the subset addresses which can be further reduced with low probability of generating extra signaling for the mobile transceivers of the subset.

In at least some embodiments, mobile transceivers may be associated with the base station transceiver 100 using a first and/or a second association. Mobile transceivers of the plurality of mobile transceivers 250 may be associated using the first association, and mobile transceivers of another plurality of mobile transceivers may be associated using the second association. In various embodiments, the plurality of mobile transceivers 250 and the other plurality of mobile transceivers may overlap, be identical and/or comprise the same mobile transceivers. In at least some embodiments, the second association may be based on further individual identifiers, which may comprise a fixed length. The first association may be based on the individual identifiers, which may be based on the information related to the bit-length. In at least some embodiments, a mobile transceiver may be identified using the individual identifier and/or the further individual identifier.

In various embodiments, the plurality of mobile transceivers 250 may comprise mobile transceivers transmitting data having a lower service priority, e.g. small data packets or data packets for Machine-Type Communication (MTC). The plurality of mobile transceivers 250 may comprise appliances connected to the Internet of Things (IoT), or mobile transceivers using Massive Machine Communication (MMC) or Machine to Machine (M2M) communication, for example. In at least some embodiments, the other plurality of mobile transceivers may comprise mobile transceivers transmitting data having a higher service priority, e.g. high quality streaming data and/or data packets having Quality of Service (QoS) requirements. In at least some embodiments, mobile transceivers may be comprised in the plurality of mobile transceivers 250 and the other plurality of mobile transceivers, and may use the first association to transmit data packets having a lower priority and use the second association to transmit data packets having a higher priority. Data packets having the lower priority may comprise smaller data packets, e.g. keep-alive data packets, push notification data packets, and/or short messaging data packets etc. Data packets having the higher priority may comprise larger data packets or data packets having QoS requirements, e.g. high-quality multimedia content data packets, streaming data packets etc.

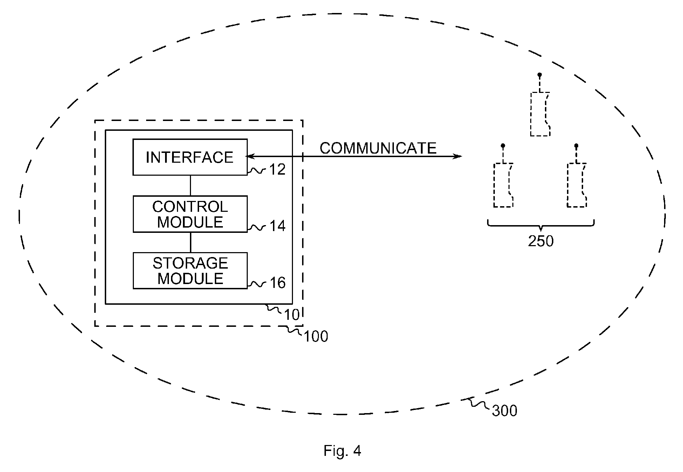

Fig. 4 illustrates a block diagram of an embodiment of the apparatus 10 further comprising a storage module 16. The control module 14 may be configured to store the information related to the number of mobile transceivers in the plurality of mobile transceivers 250 as information related to a previous number of mobile transceivers using the storage module 16. The control module 14 may be further configured to determine the information related to the bit-length based on a statistical analysis of the information related to the previous number of mobile transceivers.

In at least some embodiments, the control module 14 may store information related to at least one element of the group of a peak number of mobile transceivers associated with the base station transceiver 100 for a time window, an average number of mobile transceivers associated with the base station transceiver 100 for a time window, and a lower boundary of mobile transceivers associated with the base station transceiver 100 for a time window. A time window may be based on at least one element of the group of a date, a weekday, a time, an hour of the day, a span of hours of the day, a time event, a holiday, and a time of the year. A time event or event may correspond to a time, for which a change of mobile transceivers is expected, e.g. at an event location such as a stadium. The control module 14 may be configured to determine a probability, that a number of mobile transceivers is associated with the base station transceiver 100 at a certain time, based on the information related to the previous number of mobile transceivers, and may determine the information related to the bit-length based on the probability.

In at least some embodiments, the control module 14 may be further configured to determine and store the information related to the location of the plurality of mobile transceivers 250, the information related to the traffic pattern of the plurality of mobile transceivers 250, and/or the information related to the device class of the plurality of mobile transceivers 250. The control module 14 may be further configured to determine the subset of mobile transceivers having a limited mobility based on the information related to the location, the information related to the traffic pattern, and/or the information relate to the device class.

Fig. 4 further illustrates the apparatus 10 further comprising the at least one interface 12 and the control module 14. The control module 14 is coupled to the at least one interface 12 and to the storage module 16. The at least one storage module is configured to communicate with a plurality of mobile transceivers 250. The apparatus 10 is comprised in the base station transceiver 100. The base station transceiver 100 and the plurality of mobile transceivers 250 are comprised in the mobile communication system 300.

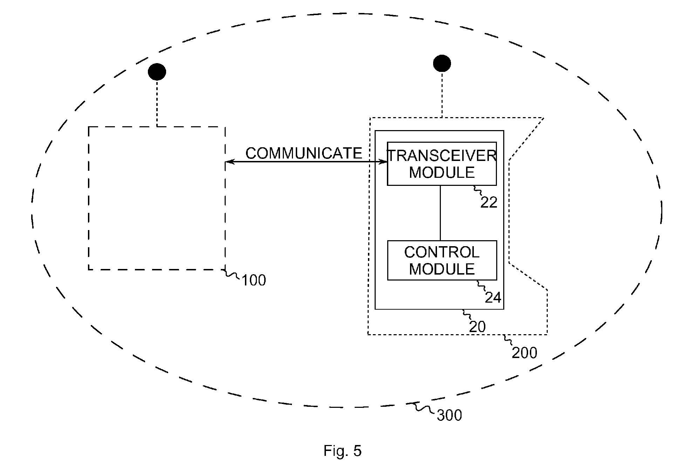

Fig. 5 illustrates a block diagram of an embodiment of an apparatus 20 for a mobile transceiver 200 of a mobile communication system 300. The apparatus 20 comprises at least one transceiver module 22 to communicate with a base station transceiver 100 of the mobile communication system 300. The mobile transceiver 200 may be comprised in a plurality of mobile transceivers 250 associated with the base station transceiver 100. In at least some embodiments, the mobile transceiver 200 may comprise the apparatus 20, as indicated by the dashed lines. Embodiments further provide the mobile transceiver 200 comprising the apparatus 20.

The at least one transceiver module 22, may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus 20 further comprises a control module 24 configured to obtain information related to a bit-length to be used to represent an identification of the mobile transceiver 200. The information related to the bit-length to be used to represent an identification of the mobile transceiver 200 may correspond to the information related to the bit-length of Fig. 1 and 2. The control module 24 is further configured to update information related to a previous identification based on the information related to the bit-length to obtain information related to a current identification of the mobile transceiver 200. In at least some embodiments, the control module 24 may be configured to obtain information related to an updated identification, comprising an individual identifier, to obtain the information related to the current identification. Alternatively or additionally, the control module 24 may be configured to update the information related to the previous identification by adding a pre-defined digit when the information related to the bit-length indicates an increased bit-length and by removing a digit when the information related to the bit-length indicates a decreased bit-length to obtain the information related to the current identification. In at least some embodiments, the control module 24 may be configured to obtain bit-length modification information comprised in the information related to the bit-length, and the control module 24 may be configured to update the information related to the previous identifier based on the bit-length modification information. In various embodiments, an update of the information related to the previous identification may correspond to a change in a bit-length used to represent an identification of the mobile transceiver 200.

The control module 24 is further configured to use the information related to the current identification to communicate with the base station transceiver 100. The base station transceiver 100 may use an individual identifier comprised in the information related to the current identification to address the mobile transceiver 200.

In embodiments the control module 24 may be implemented using one or more processing units, one or more processing devices, any means for processing, such as a processor, a computer or a programmable hardware component being operable with accordingly adapted software. In other words, the described function of the control module 24 may as well be implemented in software, which is then executed on one or more programmable hardware components. Such hardware components may comprise a general purpose processor, a Digital Signal Processor (DSP), a micro-controller, etc.

In various embodiments, the control module 24 may be configured to obtain the information related to the bit-length via a downlink broadcast channel provided by the base station transceiver 100 using the transceiver module 22. A downlink broadcast channel may correspond to a channel being used by the base station transceiver 100 to transmit information to mobile transceivers associated with the base station transceiver 100. The downlink broadcast channel may correspond to, be based on or be similar to a Broadcast CHannel (BCH) in LTE.

More details and aspects of the apparatus 20 (e.g. mobile transceiver, mobile communication system 300, base station transceiver 100, information related to the bit-length, individual identifier, bit-length modification information) are mentioned in connection with the proposed concept or one or more examples described above (e.g. Fig. 1 to 4). The apparatus 20 may comprise one or more additional optional features corresponding to one or more aspects of the proposed concept or one or more examples described above or below.

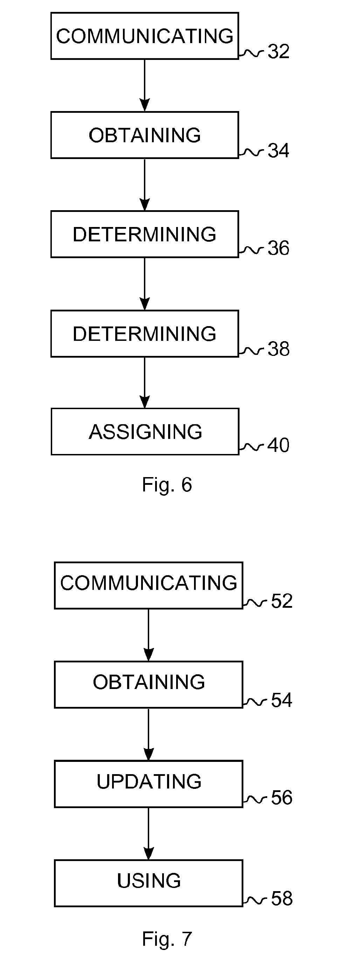

Fig. 6 illustrates a flow chart of an embodiment of a method for a base station transceiver 100 of a mobile communication system 300. The method is for providing information related to identifications of a plurality of mobile transceivers 250 of the mobile communication system 300 associated with the base station transceiver 100. The method comprises communicating 32 with the plurality of mobile transceivers 250. The method further comprises obtaining 34 information related to a number of mobile transceivers in the plurality of mobile transceivers 250. The method further comprises determining 36 information related to a bit-length to be used to represent the information related to the identifications based on the information related to the number of mobile transceivers. The method further comprises determining 38 the information related to the identifications based on the information related to the bit-length. The method further comprises assigning 40 the information related to the identifications to the plurality of mobile transceivers 250.

Fig. 7 illustrates a flow chart of an embodiment of a method for a mobile transceiver 200 of a mobile communication system 300. The method comprises communicating 52 with a base station transceiver 100 of the mobile communication system 300. The method further comprises obtaining 54 information related to a bit-length to be used to represent an identification of the mobile transceiver 200. The method further comprises updating 56 information related to a previous identification based on the information related to the bit-length to obtain information related to a current identification of the mobile transceiver 200. The method further comprises using 58 the information related to the current identification to communicate with the base station transceiver 100.

A further embodiment is a computer program product comprising a computer readable medium having computer readable program code embodied therein, the computer readable program code being configured to implement one of the above methods when being loaded on a computer, a processor, or a programmable hardware component.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may keep an overhead for small packet transmissions (e.g. MMC traffic in 5G, pulls for APP updates in smart phones) in check. The size of the overhead may be based on an actual system load. In embodiments, the overhead related with small packet transmissions may be reduced and made load-dependent.

Embodiments may reduce an overhead, e.g. for small packets in M2M communication. Assuming e.g. an overall message length of 40 bits (e.g. a message from a temperature sensor) then each bit used for an individual identifier may represent 2.5% additional overhead for the transmission. Saving 10 bits may thus result in saving 25% overhead. This may be accomplished using individual identifiers with variable length (concurrently, for a given time instant), but it may require a header indicating the individual identifier length in order to separate individual identifiers from subsequent data. Embodiments may avoid such overhead and may reduce overhead when an overall number of mobile transceivers in the plurality of mobile transceivers 250 enables a reduction in the bit-length of the individual identifier.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a base station transceiver (100) of a mobile communication system (300), the apparatus being configured for providing information related to identifications of a plurality of mobile transceivers (250) of the mobile communication system (300) associated with the base station transceiver (100), the apparatus (10) comprising:
at least one interface (12) to communicate with the plurality of mobile transceivers (250); and
a control module (14) configured to:
obtain information related to a number of mobile transceivers in the plurality of mobile transceivers (250),
determine information related to a bit-length to be used to represent the information related to the identifications based on the information related to the number of mobile transceivers,
determine the information related to the identifications based on the information related to the bit-length, and
assign the information related to the identifications to the plurality of mobile transceivers (250).

2. The apparatus (10) of claim 1, wherein the control module (14) is configured to update the information related to the bit-length based on updated information related to the number of mobile transceivers, wherein the information related to the bit-length corresponds to a number of bits used to represent an identification of a mobile transceiver, and/or wherein an update of the information related to the bit-length corresponds to a changed bit-length used to represent an identification of a mobile transceiver.

3. The apparatus (10) of claim 2, wherein the control module (14) is configured to determine information related to individual identifiers for the plurality of mobile transceivers (250) based on the information related to the bit-length, wherein a mobile transceiver of the plurality of mobile transceivers (250) is associated with an individual identifier.

4. The apparatus (10) of claim 3, wherein the control module (14) is configured to update the information related to the individual identifiers based on the information related to the bit-length and to provide the information related to the updated identifiers to the plurality of mobile transceivers (250).

5. The apparatus (10) of claim 4, wherein the control module (14) is configured to provide bit-length modification information as part of the information related to the updated identifiers.

6. The apparatus (10) of claim 5, where the control module (14) is configured to update the information related to individual identifiers by adding a pre-defined digit when the bit-length modification information indicates an increased bit-length and by removing the digit when the bit-length modification information indicates a decreased bit-length, wherein the control module (14) is configured to identify duplicate individual identifiers in the updated information related to the individual identifiers and to determine information related to a replacement individual identifier for a duplicate individual identifier.

7. The apparatus (10) of claim 1 further comprising a storage module (16), wherein the control module (14) is configured to store the information related to the number of mobile transceivers in the plurality of mobile transceivers (250) as information related to a previous number of mobile transceivers using the storage module (16), and wherein the control module (14) is further configured to determine the information related to the bit-length based on a statistical analysis of the information related to the previous number of mobile transceivers.

8. The apparatus (10) of claim 6, wherein the plurality of mobile transceivers (250) comprises a subset of mobile transceivers having a limited mobility, and wherein the control module (14) is configured to determine the information related to individual identifiers such, that, when the control module updates the information related to the bit-length, a probability, that a duplicate individual identifier occurs for an individual identifier of a mobile transceiver comprised in the subset of mobile transceivers having a limited mobility than a probability that a duplicate individual identifier occurs for an individual identifier of a mobile transceiver not comprised in the subset of mobile transceivers having a limited mobility.

9. An apparatus (20) for a mobile transceiver (200) of a mobile communication system (300), the apparatus (20) comprising:
at least one transceiver module (22) to communicate with a base station transceiver (100) of the mobile communication system (300), and
a control module (24) configured to:
obtain information related to a bit-length to be used to represent an identification of the mobile transceiver (200),
update information related to a previous identification based on the information related to the bit-length to obtain information related to a current identification of the mobile transceiver (200), and
use the information related to the current identification to communicate with the base station transceiver (100).

10. The apparatus (20) of claim 9, wherein the control module (24) is configured to update the information related to the previous identification by adding a pre-defined digit when the information related to the bit-length indicates an increased bit-length and by removing a digit when the information related to the bit-length indicates a decreased bit-length to obtain the information related to the current identification.

11. The apparatus (20) of claim 10, wherein an update of the information related to the previous identification corresponds to a change in a bit-length used to represent an identification of the mobile transceiver (200).

12. The apparatus (20) of claim 9, wherein the control module (24) is configured to obtain the information related to the bit-length via a downlink broadcast channel provided by the base station transceiver (100) using the transceiver module (22).

13. A method for a base station transceiver (100) of a mobile communication system (300), the method being for providing information related to identifications of a plurality of mobile transceivers (250) of the mobile communication system (300) associated with the base station transceiver (100), the method comprising communicating (32) with the plurality of mobile transceivers (250),
obtaining (34) information related to a number of mobile transceivers in the plurality of mobile transceivers (250),
determining (36) information related to a bit-length to be used to represent the information related to the identifications based on the information related to the number of mobile transceivers,
determining (38) the information related to the identifications based on the information related to the bit-length, and
assigning (40) the information related to the identifications to the plurality of mobile transceivers (250).

14. A method for a mobile transceiver (200) of a mobile communication system (300), the method comprising:
communicating (52) with a base station transceiver (100) of the mobile communication system (300),
obtaining (54) information related to a bit-length to be used to represent an identification of the mobile transceiver (200),
updating (56) information related to a previous identification based on the information related to the bit-length to obtain information related to a current identification of the mobile transceiver (200), and
using (58) the information related to the current identification to communicate with the base station transceiver (100).

15. A computer program product comprising a computer readable medium having computer readable program code embodied therein, the computer readable program code being configured to implement the method of any of the claim 13 and 14, when being loaded on a computer, a processor, or a programmable hardware component.
